# EUROPÄISCHE PATENTANMELDUNG

(11) **EP 1 174 876 A2**
(43) Veröffentlichungstag der Anmeldung: **23.01.2002**
(21) Anmeldenummer: 01250265.4
(22) Anmeldetag: 17.07.2001
(51) Int. Cl.: G11B 20/00, G11B 7/00

(54) **Compact Disc mit einem Kopiervorgang störenden Bereich**

(30) Priorität: 18.07.2000 DE 10035311
(71) Anmelder: DOCdata Germany BMS Berlin Mastering Services GmbH, 13355 Berlin (DE)
(72) Erfinder: Skotnicki, Edward Dipl.-Ing., 13355 Berlin (DE)
(74) Vertreter: Jungblut, Bernhard Jakob

(57) **Zusammenfassung**

Die Erfindung betrifft eine Compact Disc enthaltend Informationsbereiche in der Folge lead-in (5), Datenblock (7,8,9), lead-out (10), wobei der lead-in Bereich einen Organisationsinformationsblock über Organisationseigenschaften des Datenblocks enthält, sowie mit einem einen Kopiervorgang störenden Bereich. Sie ist dadurch gekennzeichnet, daß der Organisationsinformationsblock falsche Organisationsinformationen bezüglich des unmittelbar folgenden Datenblocks enthält und/oder einen nicht auswertbaren Blockadebereich (11,20) enthält und/oder die Compact Disc einen zweiten Organisationsinformationsblock mit einem nicht auswertbaren Blockadebereich hinter dem Datenblock enthält.

## Beschreibung

### Gebiet der Erfindung

Die Erfindung betrifft eine Compact Disc enthaltend Informationsbereiche in der Folge lead-in, Datenblock, lead out, wobei der lead-in Bereich einen Organisationsinformationsblock mit Informationen über Organisationseigenschaften des Datenblocks enthält, sowie mit einem einen Kopiervorgang störenden Bereich.

Im Rahmen des Datenblockes können die verschiedensten Informationen enthalten sein. Es kann sich um Audio Informationen gemäß dem Red Book handeln. Dann handelt es sich um eine Compact Disc Digital Audio. Es kann sich auch um Programminformationen für einen Computer gemäß dem Yellow Book handeln. Dann handelt es sich um eine CD-ROM bzw. CD-ROM Information. Eine Erweiterung des letztgenannten Standards ist die CD-ROM/XA. CD-ROM Information und Audio Information können auf einer Compact Disc gemeinsam vorgesehen sein. Die Erfindung ist grundsätzlich bei allen Arten von Informationen im Datenblock verwendbar, solange dem Datenblock ein Lead-in Bereich vorgeschaltet ist. Die Erfindung ist auch im Rahmen von multisession Compact Discs nutzbar. Solche Compact Discs werden auch als CD Extra bezeichnet und genügen den Normen des Blue Book. Beispielsweise kann eine Audio Session mit eigenem lead-in und lead-out sowie eine CD-ROM/XA Session mit eigenem lead-in und lead-out auf einer einzigen Compact Disc vorgesehen sein.

Eine Compact Disc kann grundsätzlich in beliebiger Größe und Form eingerichtet sein. Üblicherweise wird mit runden Compact Discs mit einem Außendurchmesser von 120 mm oder 80 mm gearbeitet. Bei geformten Compact Discs sind die größten Abmessungen in radialer Richtung vom Innenloch gemessen nicht größer als 120 mm oder 80 mm.

Eine Compact Disc enthält physikalische Strukturen, welche sequenziell angeordnet und optisch auslesbar sind, beginnend im Bereich nahe des Innenlochs und spiralförmig nach außen verlaufend bis zum Ende der Information.

Der Begriff der Compact Disc umfaßt auch DVD's (Digital Versatile Disc), welche sich durch eine höhere Speicherkapazität auszeichnen. Audio-/Videoinformation wird auf einer Compact Disc bzw. DVD typischerweise im AC-3, Dolby Digital, Dolby Surround, DTS oder MPEG2 gespeichert.

### Hintergrund der Erfindung.

Die Herstellung einer Compact Disc erfolgt typischerweise wie folgt. Die auf die Compact Disc zu übertragende Information wird zunächst auf einem Datenträger gespeichert. Im Rahmen des Premastering werden die Daten aufbereitet und hieraus Dateien gebildet. Die Dateien werden dann formatiert und dem Mastering zugeführt. Im Rahmen des Mastering werden ggf. zunächst Korrektur- und Prüfsummen-Daten (EDC, ECC) beigefügt. Weiterhin werden der lead-in Bereich und der lead-out Bereich generiert, ggf. für jede Session separat, und der Information (jeder Session, sofern mit multisession gearbeitet wird) vor- bzw. nachgeschaltet. Der lead-in Bereich enthält Organisationsinformation bezüglich der folgenden Information. Dies ist einerseits Information über das Format der Information. Weiterhin kann dies beispielsweise Information über die Länge von einzelnen Tracks der Information enthalten, im Falle von Audio Information beispielsweise über die Spieldauer eines Musikstückes. Schließlich kann auch Information über die einzelnen Tracks, beispielsweise Titel, enthalten sein. Der lead-out Bereich definiert das Ende des Inhalts der Compact Disc bzw. einer session. Eine Compact Disc wird üblicherweise von innen beginnend ausgelesen.

Nach dem Zusammenfügen des Informationsstromes in vorstehender Weise wird dieser Informationsstrom auf einen Master geschrieben. Hierbei handelt es sich üblicherweise um einen hochpolierten Glasmaster mit extrem hoher Oberflächengüte in der Qualität eines astronomischen Spiegels. Andere Substratmaterialien sind selbstverständlich ebenfalls möglich, sofern die Oberfläche ausreichend plan ist und eine ausreichende Oberflächengüte aufweist. Die Oberfläche des Masters trägt eine lichtempfindliche Schicht, den Photo-Resist, oder eine Schicht aus verdampfbarem Kunstoff, dem Non-Photo-Resist. Der Informationsstrom wird dann zur Modulation eines den Master von innen nach außen spiralförmig überstreichenden Lasers eingesetzt, wobei der Laser entsprechend der digitalen Zustände der Information aus- und eingeschaltet wird. Hierbei wird eine modifizierte Pulsdauermodulation (EFM) zur Codierung der digitalen Information verwendet. Im Falle des Photo-Resists werden in einem chemischen Entwicklungsbad die belichteten Bereiche ausgewaschen. Im Falle des Non-Photo-Resists sind die belichteten Stellen des verdampfbaren Überzugs durch die Laserenergie verdampft. Die belichteten Stellen bilden Vertiefungen, die Pits. Die nicht belichteten Stellen bilden die ursprüngliche Oberfläche des Überzuges, das Land. Das Pitvolumen bzw. die physikalische Pitstruktur, beispielsweise Pitlänge (in Spiralrichtung gesehen) und/oder Pitflankenstruktur, werden im Falle des Photo-Resists durch den Entwicklungsprozeß gesteuert und normgerecht eingestellt. Im Falle des Non-Photo-Resists erfolgt dies durch Steuerung der eingestrahlten Energie des Lasers. Anschließend wird auf den beschriebenen Master eine Metallschicht aufgebracht, üblicherweise Nickel, im Wege beispielsweise des Argon-Ionen-Sputtering. Dann wird auf galvanischem Wege die Metallschicht soweit aufgebaut, bis eine Trennung der Metallschicht und des eigentlichen Masters möglich wird. Man erhält somit gleichsam ein metallisches Negativ des Masters. Mittels dieses Negativs können nunmehr die Compact Discs hergestellt werden. Dies erfolgt entweder im reinen Spritzgußverfahren oder im Spritzprägeverfahren. Im ersten Falle wird das flüssige Strukturmaterial der Compact Disc, üblicherweise Polykarbonat, in eine Spritzgußform, deren eine Hauptfläche das metallische Negativ bildet, injiziert. Nach dem Abkühlen, Solidifizieren und Herauslösen des Kunststoffs wird die eine Kunststoffscheibe mit Pits und Land als Positiv erhalten. Beim Spritzprägeverfahren wird das metallische Negativ gleichsam einem Prägestempel einer gespritzten Scheibe aufgedrückt. Anschließend wird die die Information in Form von Pits und Land enthaltende Seite der Scheibe im Wege des Sputtering metallisiert, wobei die für die Auslesung mit einem Laser, beispielsweise eines Abspielgerätes, notwendige Reflektivität eingestellt wird. Als Materialien kommen meist Aluminium, Gold, Silber und Kupfer in Frage. Die Schichtdicke beträgt in der Größenordnung von 20 bis 100 nm, meist 40 bis 50 nm. Schließlich wird die metallisierte Seite der Scheibe lackiert und ggf. bedruckt.

Das Abspielen bzw. Auslesen einer Compact Disc erfolgt von der der Metallschicht abgewandten Seite mittels eines Laserstrahls. Dabei erfolgt eine Fokussierung des Lasers bzw. der das reflektierte Laserlicht auffangenden Photozelle auf den Bereich der Oberflächenebene des Lands. Beschädigungen der Oberfläche der Compact Discs oder Verschmutzungen werden so ausgeblendet. Von Land reflektiertes Laserlicht erzeugt in der Photozelle ein Signal, während von einem Pit reflektiertes Licht durch den transparenten Trägerkunststoff der Compact Disc so gebeugt bzw. gestreut wird, daß es kein Signal in der Photozelle erzeugt. Die Folge der Photozellenzustände "kein Signal" und "Signal", entstanden durch Ablesen mittels des Lasers in Spiralrichtung, stellt die digitale Information dar, welche von der weiteren Elektronik ausgewertet und weiterverarbeitet, beispielsweise in ein Audiosignal umgewandelt, wird. Hierbei ist beachtlich, daß der Photozellenzustand "kein Signal" und der Photozellenzustand "Signal" zulässige elektrische Wertebereiche mit einem verbotenen Bereich dazwischen umfassen. Dem verbotenen Bereich ist von der folgenden Elektronik kein digitaler Zustand zuordbar und führt zu Fehlfunktionen der Elektronik bzw. Fehlermeldungen. Wesentlich für die Funktion ist daher, daß die Höhe der Pits, deren Flankenform und die Reflektivität von Pits und Land so ausgebildet sind, daß eine Auslesung zu keinem Photozellenzustand im verbotenen Bereich führt. Ein weiteres Kriterium ist, daß die Pitlänge in einem genormten zulässigen Bereich ist. Schließlich muß eine Abtastung einer Pit/Land Folge die Demodulation zu einem digitalen Signal erlauben.

Physikalische Eigenschaften gebräuchlicher Compact Discs sind wie folgt. Der Durchmesser beträgt 120 mm oder 80 mm. Der Innenlochdurchmesser ist 15 mm. Die Dicke beträgt 1,2 mm. Die Spurweite ist 0,7 µm (DVD) oder 1,6 µm (CD). Die minimale Pitlänge beträgt 0,4 bis 0,44 µm (DVD) oder 0,83 bis 0.972 µm (CD). Die numerische Apertur beträgt 0,6 (DVD) oder 0,45 (CD). Die Wellenlänge des Lasers beträgt 635 bis 650 nm (DVD) oder 770 bis 795 nm (CD). Die Kapazität beträgt 4,7 bis 17,08 GByte (DVD) oder 650 MByte (CD; Yellow Book, Mode 1). Grundsätzlich sind aber im Rahmen der Erfindung beliebige physikalische Eigenschaften einrichtbar, solange entsprechend abgestimmte Lesevorrichtungen verwendet werden. Die Ausführungen zum verbotenen Bereich gelten grundsätzlich in jedem Falle.

### Stand der Technik und der Erfindung zugrundeliegendes technisches Problem.

Bei den aus der Praxis bekannten Compact Discs des eingangs genannten Aufbaus kann mittels sogenannter Brenner und geeigneter Software hierzu die Information der Compact Disc gelesen und auf eine oder mehrere beschreibbare Compact Discs (leere "Rohlinge") übertragen werden. Beschreibbare Compact Discs sind beispielsweise CD-R (Compact Disc Recordable) oder CD-RW (Compact Disc ReWriteable). In beiden Fällen werden Pits nicht physikalisch ausgebildet, sondern diese werden mittels organischer Farbstoffe oder Phase-Change-Substanzen simuliert, wobei Reflexionseigenschaften moduliert werden.

Das Übertragen der Inhalte einer gekauften Compact Disc auf eine beschreibbare Compact Disc stört aus Gründen des Urheberechtes, da damit unzulässigerweise unauthorisierte Kopien von Werken erstellt werden.

Aus der Praxis sind mehrere Ansätze zur Einrichtung eines Kopierschutzes bekannt. Ein Kopieschutz bewirkt, daß ein Brenner bzw. seine Software keine Kopie einer als Vorlage benutzten, gekauften Compact Disc herstellen kann bzw. daß die kopierte Information im Zuge des Kopierens verändert oder verstümmelt wird. Details der bekannten Kopierschutze sind nicht veröffentlicht. Die Praxis zeigt bei den insofern angewandten Kopierschutzverfahren, daß entweder der Kopierschutz leicht zu umgehen ist, beispielsweise durch Adaption der Software eines Brenners, oder der Kopierschutz zu Problemen bei dem legalen Abspielen der gekauften Compact Disc auf einem konventionellen Abspielgerät führt, beispielsweise Fehlfunktionen des Abspielgerätes auslöst.

Bekannt ist weiterhin ein simpler Kopierschutz, bei welchem die verkaufte Compact Disc in der Organisationsinformation eine Information enthalten, die die Compact Disc als Kopie identifiziert. Dies wird von einer einfachen 1:1 Kopier-Brennersoftware identifiziert und der Kopiervorgang wird verweigert, da die Anfertigung einer Kopie von einer Kopie unzulässig ist und die Brennersoftware entsprechend eingerichtet ist. Diese Art von Kopierschutz läßt sich jedoch durch Reprogrammierung der Brennersoftware recht leicht umgehen.

Der Erfindung liegt daher das technische Problem zugrunde, einen Kopierschutz bereit zu stellen, welcher einerseits das Kopieren mittels eines Brenners zuverlässig stört, andererseits aber eine einwandfreie Funktion der Compact Disc im Rahmen legalen Abspielens mit einem konventionellen Abspielgerät gewährleistet.

### Grundzüge der Erfindung.

Zur Lösung dieses technischen Problems lehrt die Erfindung, daß der Organisationsinformationsblock falsche Organisationsinformationen bezüglich des unmittelbar folgenden Datenblocks enthält und/oder einen nicht auswertbaren Blockadebereich enthält und/oder die Compact Disc einen zweiten Organisationsinformationsblock mit einem nicht auswertbaren Blockadebereich hinter dem Datenblock enthält. Bevorzugterweise handelt es sich bei der falschen Organisationsinformation um Laufzeitinformation bezüglich der Tracks im Datenblock. Zusätzlich hierzu oder unabhängig hiervon kann die falsche Organisationsinformation Formatinformation sein. Formatinformation kann auch gänzlich fehlen. Der Organisationsinformationsblock kann auch trunkiert sein. Nicht auswertbar ist ein Blockadebereich, in welchem entweder für ein übliches Lesesystem unsinnige Information enthalten ist oder keine als Information detektierbare Strukturen aufweist. Beide vorstehenden Maßnahmen können auch gemeinsam eingerichtet sein, sei es innerhalb eines einzigen Organisationsinformationsblockes oder in verschiedenen Organisationsinformationsblöcken einer multisession Compact Disc, welche beispielsweise mit einer Audio Session am Anfang und einer CD-ROM Session am Ende ausgestattet sein kann. Enthält der Datenblock Audio Information, so ist die Einrichtung von falscher Organisationsinformation im zugehörigen lead-in bevorzugt. Im Rahmen eines lead-in vor einem CD-ROM Datenblocks ist der Blockadebereich bevorzugt. Vor dem lead-out einer CD-DA, aber nach dem Datenblock, kann auch ein Bereich vorgesehen sein, welcher eine CD-ROM Session mimikriert, insbesondere den lead-in einer CD-ROM Session, wobei dieser Bereich dann einen Blockadebereich umfaßt. Ein Organisationsinformationsblock kann insbesondere ein lead-in oder lead-out sein.

Die Erfindung beruht auf der Erkenntnis, daß zum Kopieren mittels eines Brenners mit zugehöriger Software einerseits und zum Abspielen einer Compact Disc beispielsweise auf einem Audio-Player andererseits verschiedene Analyseprozeduren ablaufen. Ein wesentlicher Unterschied besteht darin, daß ein Brenner bzw. seine Software für das Kopieren auf die Information im lead-in Bereich und/oder auf Formatanalyse im Datenblock der Vorlage Compact Disc angewiesen ist und nicht (ergänzend) deren Datenblock analysiert, während beispielsweise ein Audio-Player auch Sekundärinformation gleichsam zur Reparatur fehlender oder falscher Information aus dem lead-in Bereich aus dem Datenblock beziehen kann. Dies beruht darauf, daß ein Brenner einen linearen Datenstrom, beginnend mit dem (ersten) lead-in erstellen muß. Dagegen kann beispielsweise ein simpler nur-Audio-Player oder ein auf dieses Verhalten eingestelltes Laufwerk feststellen, daß der angefahrene Bereich eines Tracks keine Pause zwischen zwei Tracks ist (aufgrund falscher Organisationsinformation bezüglich der Position des Tracks bzw. der Laufzeit des Tracks), nach der nächstgelegenen Pause suchen und in der gefundenen Pause dann einsetzen. Der Brenner würde beispielsweise demgegenüber mitten in einem Track beginnen zu lesen und zu kopieren, was aus offensichtlichen Gründen bei der so hergestellten unzulässigen Kopie stört oder mit einer Fehlermeldung den Kopiervorgang abbricht. Es versteht sich, daß die falschen Organisationsinformationen so gewählt werden, daß diese von üblichen Korrekturalgorithmen der Abspielgeräte kompensierbar sind, i.e. die Abweichungen der Inhalte der falschen Organisationsinformation zu der zutreffenden Organisationsinformation müssen innerhalb der Korrekturtoleranzbereiche der Abspielgeräte liegen.

Mit anderen Worten ausgedrückt, die Grundkonzeption der Erfindung besteht darin, den für die Durchführung der Kopie bzw. das Einlesen der Kopiervorlage zwingend erforderlichen Analyseprozeß eines Brenners bzw. dessen Software durch Verfälschung von Informationsinhalten oder nicht-auswertbar Gestaltung der Compact Disc im Rahmen standardisierter Informationstrukturen selektiv so zu stören, daß ein Abbruch des Analyseprozesses und/oder des Kopierprozesses des Brenners stattfindet, bzw. zu einer unbefriedigenden Kopie führt, ein Player demgegenüber jedoch unter Einsatz ohnehin vorhandener Korrekturroutinen bzw. Nachfahrvorgänge die kopiergeschützte Compact Disc jedoch einwandfrei abspielt.

In diesen Zusammenhängen lehrt die Erfindung insbesondere eine Compact Disc enthaltend Informationsbereiche mit einem Datenblock, insbesondere Audioblock und/oder CD-ROM, sowie zumindest einen lead-in und/oder einen lead-out,wobei lead-in und/oder lead-out einen Blockadebereich umfassend leseinkompatible physikalische Strukturen enthalten.

Bevorzugte Ausführungsformen der Erfindung Folgend werden zunächst Ausführungsformen der letztgenannten Variante der Erfindung näher erläutert.

Der Blockadebereich kann im vor einem Audioblock eingerichteten lead-in angeordnet sein. Dabei ist es bevorzugt, wenn der Blockadebereich 0,1 bis 60 s, vorzugsweise 1 bis 15 s, insbesondere 2 bis 10 s, vor dem Ende des lead-in beginnend eingerichtet ist. Der Blockadebereich kann sich bis in die erste Spur des Audioblocks erstrecken, und zwar vorzugsweise 0,1 bis 60 s, vorzugsweise 1 bis 15 s, insbesondere 2 bis 10 s, weit. Dann empfiehlt es sich, wenn die erste Spur des Audioblocks als Null-Datei ausgebildet ist und vorzugsweise eine Länge 1 bis 600 s, höchstvorzugsweise 1 bis 60 s, insbesondere 10 bis 30 s, gemessen ab Ende des Blockadebereiches, aufweist. Null-Datei meint, daß (lesekompatibel) digitale Nullen oder digitale Informationen, die nicht als Audiodatei funktionieren bzw. ein Audiosignal erzeugen, als auslesbarer Datenstrom eingerichtet sind. Zweck dieser Variante ist, daß ein Player die nächste, echte Audiodaten enthaltende Spur als Spur 1 identifiziert und anzeigt, obwohl grundsätzlich die Nulldatei (mit einem Teil des Blockadebereiches) bereits als Spur 1 qualifizieren würde. Bei einer CD in der Ausführungsform als CD Extra, kann ebenfalls zumindest ein Blockadebereich eingerichtet sein, und zwar beispielsweise im lead-in der ROM Spur, wobei optional zusätzlich das lead-in des Audioblocks einen weiteren Blockadebereich enthalten kann. Dieser Blockadebereich kann sich bis in die ROM-Spur hinein erstrecken.

Im Einzelnen können die leseinkompatiblen Strukturen des Blockadebereiches im lead-in vor dem Audioblock durch Modulation des Datenstromsignals mit 1 bis 10000 kHz, vorzugsweise 10 bis 1000 kHz, insbesondere 50 bis 200 kHz, erzeugt wird, und/oder des Blockadebereiches im lead-in vor der ROM Spur durch Modulation des Datenstromsignals mit 1 bis 10000 Hz, vorzugsweise 10 bis 1000 Hz, insbesondere 10 bis 100 Hz, erzeugt werden. Im Falle der hohen Frequenzen hat sich eine Rechteckfunktion mit einem Taktverhältnis im Bereich von 1:1 bis 1:10 (an/aus) bewährt. Im Falle der niedrigen Frequenzen hat sich ein Taktverhältnis von 10:1 bis 1:10 bewährt. Das Datenstromsignal kann dabei ein elektronisches Signal oder ein optisches Signal, i.e. das des Lasers, sein. Eine Modulation des elektronischen Datenstromsignals kann in üblicher Weise mittels eines in eine geeignete Signalleitung eingeschleiften Mischers erfolgen. Eine Modulation des optischen Datensignalstroms kann mit Hilfe eines in dem Lichtstrahl des Lasers, mittels welchem der Master hergestellt wird, angeordneten Choppers erfolgen. Im Falle der Modulation des elektronischen Datensignalstroms kann die Modulation mittels beliebiger Wellenformen, beispielsweise Rechteckfunktion, Sinusfunktion oder Dreieckfunktion erfolgen. Dabei sollte die Modulation dergestalt erfolgen, daß das erhaltene Signal im Takt der Periode der gewählten Wellenform an- bzw. ausgeschaltet wird. Das Modulationssignal kann beispielsweise mittels eines Funktionsgenerators oder einfachen Oszillators erzeugt und hinsichtlich Frequenz sowie optional Taktverhältnis gesteuert werden. Ein Chopper ist beispielsweise eine rotierende Vorrichtung, welche Ausnehmungen aufweist, durch welche der Lichtstrahl des Lasers hindurchtreten kann, während ansonsten der Lichtstrahl abgeschattet wird. Im einfachsten Fall handelt es sich um eine elektromotorisch angetriebene Lochscheibe, wobei die Löcher entlang einer Kreisbahn angeordnet sind, die den Lichtstrahl des Lasers schneidet.

Das Taktverhältnis der Modulation ist dabei von dem Verhältnis der Länge der Ausnehmungen entlang der Kreisbahn zu der Länge der Abschnitte zwischen zwei Ausnehmungen entlang der Kreisbahn definiert. Die Frquenz kann über eine Steuerung der Drehzahl des Choppers gesteuert werden.

Bevorzugt ist es in der erstgenannten Variante der Erfindung (das Folgende gilt aber auch für die zweitgenannte Variante und umgekehrt), wenn der Blockadebereich physikalische Strukturen enthält, welche leseinkompatibel sind, und oder Datenfragmentstrukturen. Zweckmäßigerweise sind diese hinter einem Audio Datenblock angeordnet. Diese Weiterbildung der Erfindung nutzt die Tatsache, daß ein Brenner bzw. dessen Software bei beispielsweise fehlender Formatinformation im lead-in Bereich auch in anderen Bereichen, beispielsweise hinter dem Datenblock nach der Formatinformation sucht. Die leseinkompatiblen physikalischen Strukturen führen dann zu einem "Aussteigen" der Brennersoftware und der versuchte Kopiervorgang wird mit einer Fehlermeldung oder einer andersartigen Programmunterbrechung abgebrochen. Datenfragmentstrukturen lassen sich lesen, sind jedoch in einer Analyse durch die Brennersoftware nicht verwertbar bzw. dateninhaltsmäßig inkonsistent. Leseinkompatibel sind solche physikalische Strukturen, die bei der Auslesung mittels des Lasers zu einem Zustand der Photozelle in dem verbotenen Bereich führen oder im Rahmen der Pulsbreitenmodulation keine sinnvolle Demodulation zulassen. Dies läßt sich im Rahmen des Mastering durch geeignete Prozeßsteuerung, beispielsweise bei der Entwicklung oder beim Schreiben, ohne weiteres einrichten. Es muß lediglich im Rahmen der Prozeßsteuerung dafür gesorgt werden, daß im Blockadebereich nicht-normgerechte physikalische Strukturen entstehen. Dies fällt dem Fachmann, welcher üblicherweise mit der Auswahl und Steuerung der Prozesse nach Maßgabe der Normen wohl vertraut ist, nicht schwer. Die leseinkompatiblen physikalischen Strukturen können ausgewählt sein aus der Gruppe bestehend aus "normfremde Pithöhe, normfremde Reflektivität, normfremde Pitlänge, normfremder Spurabstand, normfremde Flankensteilheit der Pitflanken, pitfreie Spur, Spur mit durchgehendem Pit, und Kombinationen solcher physikalischer Strukturen". Als pitfreie Spur ist ein Land bezeichnet, welches sich über beispielsweise eine oder mehrere Spiralumgänge erstreckt. Entsprechendes gilt für das durchgehende Pit. Dies läßt sich durch beispielsweise normfremde Rotationsfrequenz beim Mastering oder durch entsprechende Laseransteuerung erreichen. Fehlfunktionen eines Brenners bzw. seiner Software aufgrund solcher physikalischer Strukturen lassen sich auch mit aufwändiger Reprogrammierung des Brenners nicht kompensieren. Vielmehr müßte in der Regel auch die Hardware des Brenners angepaßt werden, was einen extremen Aufwand darstellt und für "normale" Personen, welche Raubkopien herstellen, nicht leistbar ist.

Wenn der Blockadebereich eine Struktur entsprechend Organisationsinformationen und/oder CD-ROM Daten aufweist stellt dies zusätzlich sicher, daß der Brenner bzw. seine Software in der Suche nach der Organisationsinformation auf den Blockadebereich zugreift, da er diese zunächst als ordnungsgemäß erkennt, und im Laufe des Lesens durch die leseinkompatiblen physikalischen Strukturen in eine Fehlfunktion bzw. eine Fehlermeldung hineingesteuert wird.

Die Erfindung betrifft auch ein Verfahren zur Herstellung einer erfindungsgemäßen Compact Disc mit den folgenden Verfahrensstufen: a) es erfolgt eine Datenerfassung, b) die erfaßten Daten werden in einen Datenblock formatiert, c) es wird ein Organisationsinformationsblock erstellt und dem Datenblock als lead-in Bereich vorgeschaltet, wobei der Organisationsinformationsblock falsche Organisationsinformationen enthält, und/oder es wird ein Organisationsinformationsblock mit einem Blockadebereich erstellt und dem Datenblock als lead-in Bereich vorgeschaltet oder (unmittelbar) nachgeschaltet, d) optional wird Information für einen lead-out Bereich erstellt und dem Datenblock nachgeschaltet, e) der Datenstrom aus Stufe c) oder d) wird auf einen Master geschrieben, und f) mit dem in Stufe e) erhaltenen Master werden eine Vielzahl von Compact Discs hergestellt. Dabei können innerhalb des Blockadebereichs im Zuge des Schreibens auf einen Master in Stufe e) leseinkompatible physikalische Strukturen erzeugt werden. Selbstverständlich können diese Strukturen sich bis in eine erste Audio Spur und/oder CD-ROM Spur hinein erstrecken. Für das erfindungsgemäße Verfahren geltend die zuvor angebrachten Ausführungen entsprechend.

Schließlich betrifft die Erfindung ein Programm zur Steuerung einer Anlage zur Herstellung von Masters codierend für ein erfindungsgemäßes Verfahren. Premastering und Mastering werden im Rahmen der Produktionsanlagen für Compact Discs durch digitale Programme gesteuert. Im Rahmen der Erfindung werden die Routinen der Erstellung des lead-in und/oder der Prozeßsteuerung bei der Herstellung des Masters so modifiziert, daß falsche organisationsinformationen und/oder leseinkompatible physikalische Strukturen auf den Master und somit letztendlich auf die produzierten Compact Discs gebracht werden. Ein erfindungsgemäßes Programm steuert neben den üblichen Mastering Prozessen insbesondere die Modulation des Datenstromsignals, und zwar in Abhängigkeit von der vorgegebenen Position des Blockadebereiches innerhalb des Datenstroms.

Im folgenden wird die Erfindung anhand von lediglich eine Ausführungsform erläuternden Beispielen näher erläutert.

### Beispiel 1: Herstellung einer kopiergeschützten Compact Disc Digital Audio.

Digitalisierte Musikstücke werden als Tracks zu dem, einen Datenblock bildenden, Programmbereich aneinandergereiht. Dann wird ein Organisationsinformationsblock zusammengestellt, welcher im wesentlichen das Inhaltsverzeichnis (TOC - Table of Content) einschließlich der Dauer der einzelnen Tracks sowie des Formats der Tracks enthält. Dieser Organisationsinformationsblock wird zwischengespeichert. Dann wird der Organisationsinformationsblock mit um 15 s abweichenden Daten zur Dauer der einzelnen Tracks modifiziert und als für die CD bestimmter Organisationsinformationsblock abgespeichert. Dann wird ein den Blockadebereich enthaltender Informationsblock erstellt, welcher die Struktur einer CD-ROM Information enthält. Schließlich wird ein üblicher lead-out erstellt. Sodann werden die so erhaltenen Komponenten in der Folge Organisationsinformationsblock, Programmbereich, Blockadebereich und lead-out aneinandergereiht zur Übertragung auf einen Master.

Die Übertragung auf den Master erfolgt in an sich üblicher Weise mit der Ausnahme, daß bei der Übertragung des Blockadebereichs der LBR (Laser Beam Recorder) zusätzlich zur Erzeugung eines einzigen "Pits" oder "Lands" über mehrere Spiralumläufe (Spuren) angesteuert wird. Dies hat zur Folge, daß bei dem Auslesen einer mit dem Master hergestellten Compact Discs mittels einer Brennersoftware Fehlermeldungen erzeugt werden. Sodann werden unter Verwendung des Masters in üblicher Weise Cmpact Discs hergestellt.

### Beispiel 2: Abspielen einer Compact Disc aus Beispiel 1 in einem konventionellen CD-Abspielgerät.

Nach dem Einlegen der Compact Disc in das Abspielgerät des Typs Kenwood DP4090 und Anwählen eines Titels fährt der Lesekopf nach Maßgabe der falschen Information zur Dauer des Tracks diesen an. Dabei erkennt die Software des Abspielgerätes anhand der nicht detektierten Musikpause, daß offenbar der Anfang des Stückes nicht ordnungsgemäß angefahren worden ist. Im Rahmen der Korrekturalgorithmen des Abspielgerätes wird nun die unmittelbare Nachbarschaft der von Lesekopf angefahrenen Stelle abgesucht nach einem Bereich mit einer Pause. Dabei steuert der Korrekturalgorithmus den Lesekopf in einen Bereich von ca. + 20 s um die zunächst angefahrene Position an. Da die Abweichung der tatsächlichen Dauer des Tracks von den Daten zur Dauer im ersten Organisationsinformationsblock nur 15 s beträgt, "fängt" der Korrekturalgorithmus bzw. der Lesekopf die gesuchte Pause und beginnt das Abspielen des ausgewählten Tracks in ordnungsgemäßer Weise. Eine Benutzerperson bemerkt einen Effekt des Kopierschutzes allenfalls in dem um Sekundenbruchteile späteren Beginn des Abspielens nach Anwahl des Tracks, verglichen mit einer Compact Disc ohne erfindungsgemäßen Kopierschutz. Der Blockadebereich wird von dem Abspielgerät ignoriert, da es nicht CD-ROM fähig ist. Daher tritt der Blockadebereich nicht in Wirkung.

### Beispiel 3: Versuch des Abspielens einer erfindungsgemäßen Compact Disc auf einem Computer.

Eine Compact Disk gemäß Beispiel 1 wird in das CD-Laufwerk eines Notebooks mit dem Betriebsystem Windows 95 eingelegt. Sodann wird das Programm Zubehör, Multimedia, CD-Wiedergabe aufgerufen. Nach Drücken der virtuellen Tasten "Play" oder "Next Title" beginnt der Computer die Wiedergabe des angewählten Tracks, jedoch nicht am Anfang des Tracks, sondern mittendrin. Das Anfahren des Anfang eines Tracks ist nicht möglich. Beim Durchlaufen eines angewählten Tracks endet das Musikstück und das nächste Musikstück beginnt, obwohl noch eine restliche Laufzeit des zuvor angesteuerten tracks angezeigt wird. Eine Abspeicherung eines vollständigen Musikstücks ist nicht ohne weiteres möglich.

### Beispiel 4: Versuch der Kopie einer erfindungsgemäßen Compact Disc mittels eines Brenner und dazugehöriger brennersoftware.

An einen handelsüblichen Computer mit dem Betriebsystem Windows 95 wird ein Brenner des Typs Yamaha CD-ReWriter 4416S angeschlossen und die Software WinOnCD, Version 3.6, aktiviert. In den Brenner wird eine zu kopierende Compact Disc gemäß Beispiel 1 eingelegt. Sodann wird versucht, durch Aktivierung der Option CD-DA-Quellen auf Festplatte speichern des Registers CD-DA auslesen, den Inhalt der Compact Disc auf die Festplatte zu übertragen. Nach einiger Zeit erfolgt die Fehlermeldung CD nicht eingelegt. Eine Ausführung der Programmfunktion ist nicht möglich und somit kann auch keine Kopie der Compact Disc gebrannt werden.

### Beispiel 5: Elektronische Schaltung zur Modulation eines elektronischen Datenstromsignals.

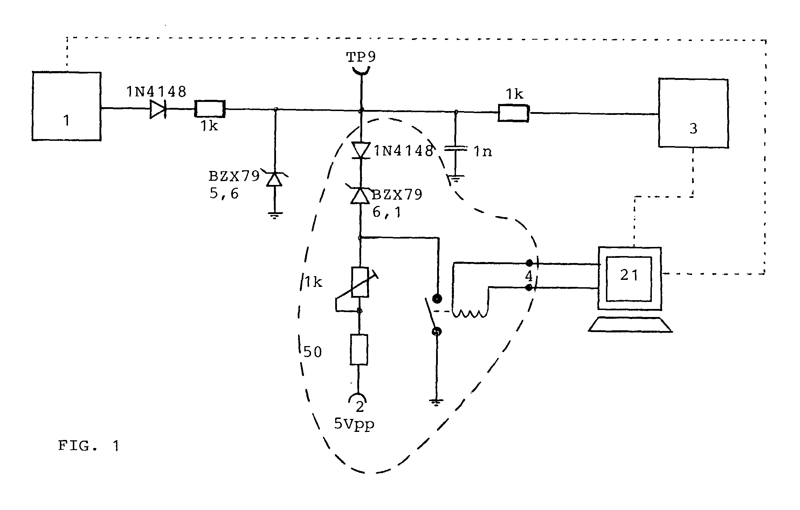

In der Figur 1 ist eine geeignete elektronische Schaltung zur Modulation eines Datenstromsignals gezeigt. Es handelt sich dabei um eine Schaltung, die an den TP9 eines Gerätes Mastering AM200 der Toolex ODME, Eindhoven, Niederlande, in Januar 2000 hergestellte Version, angeschlossen ist. Die durch gestrichelte Linien umschlossenen Komponenten sind dabei die hinzufügten elektronischen Bauelemente. Die übrigen elektronischen Bauelemente gehören originär zu dem genannten Gerät. Entsprechende Schaltungen lassen sich bei dem Gerät 8'' LBR einrichten.

Von dem Acustic/Optics Driver (Modulator Mastering) 1 wird das Datenstromsignal zur Verfügung gestellt, welches abgestimmt ist auf die Drehzahl des Masters. Die Steuerung des Drivers 1 und des Masters erfolgt mittels eines Computers. Die am TP9 angefügte Zusatzschaltung bewirkt, daß das vom Driver kommende Datenstromsignal im Takt der am Anschluß 2 angelegten Rechteckspannung an- und ausgeschaltet und zur Lasersteuerung 3 weitergeleitet wird. Dabei erfolgt die Aktivierung bzw. Deaktivierung der Modulation im Ausführungsbeispiel über den Steuerungsanschluß 4, welcher wiederum mit dem Computer zur Steuerung des Drivers und Masters verbunden ist. Dabei wird die Modulation zu definierten Zeitpunkten innerhalb des Datenstromsignals aktiviert und deaktiviert, und zwar so, daß der Blockadebereich an der gewünschten Stelle innerhalb der Datenfolge eingerichtet wird. Dies ist in den folgenden Beispielen näher erläutert.

### Beispiel 6: Einrichtung eines leseinkompatiblen Blockadebereiches im lead-in einer Audio CD.

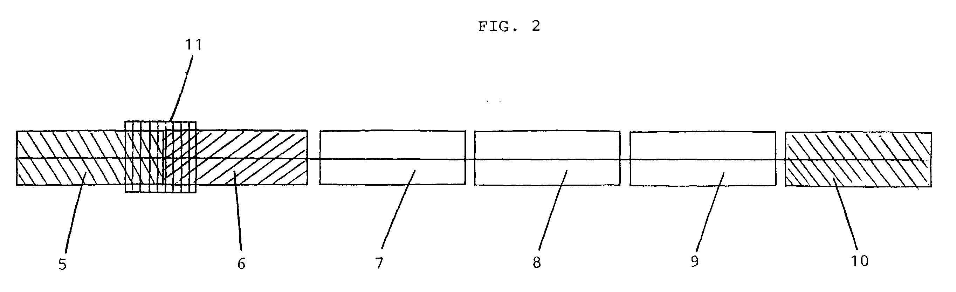

In der Figur 2 ist eine lineare Entwicklung der Dateninhalte einer Audio CD als Funktion der Zeit im Datenstrom bzw. als Funktion des Ortes auf der Spiralbahn einer so hergestellten CD dargestellt.

Man erkennt zunächst ein lead-in 5, welches auf übliche Weise im CD-Audio Format hergestellt ist. Die Dauer des lead-in ist 02:25 (min.:s). Hieran schließt sich eine Nulldatei 6 mit einer Dauer von ca. 00:20 an. Hieran anschließend folgen die Audio Spuren 7,8,9 (selbstverständlich sind mehr als drei Audio Spuren möglich) mit verschiedenen Musikstücken. An die letze Audio Spur ist wiederum das lead-out 10 angeschlossen. Die vorstehenden Zeiten beziehen sich auf die Laufzeiten beim Lesen der CD mit normaler Geschwindigkeit.

Gemäß der Erfindung ist ein Blockadebereich 11 vorgesehen, welcher 00:04 vor Ende des lead-in 5 beginnt und sich 00:04 in die Nulldatei 6 hinein erstreckt. Der Blockadebereich ist dadurch hergestellt worden, daß während des Masterings mit Hilfe der Schaltung des Beispiels 5 die Modulation über den Steuerungsanschluß 4 zu Zeitpunkten an- und wieder abgeschaltet wurde, zu denen die zu den genannten Laufzeiten gehörenden Datensignalströme an TP9 gleichsam vorbeifließen.

Im Beispiel wurde mit einem am Anschluß 2 angelegten Signal von 5Vpp (0 bis -5V) in Rechteckform, mit einer Frequenz von 100 kHz und einem Tastverhältnis von 1:6 (1 = 0V, 6 = -5V) gearbeitet.

Ein normaler Audio Player überspringt den Blockadebereich und beginnt mit der nächstliegenden Inhalte aufweisenen Audio Spur. Die Null Datei gewährleistet dabei, daß die erste "echte" Audio Spur vom Player als Spur 1 erkannt und zur Anzeige gebracht wird. Demgegenüber versucht ein Brenner vor einer Auslesung der Audio Spuren zunächst das komplette lead-in 5 auszulesen, was aufgrund des Blockadebereiches mißlingt und zu einer Fehlermeldung bzw. einem Abbruch des Programms des Brenners führt.

### Beispiel 7: Einrichtung eines leseinkompatiblen Blockadebereiches im ROM lead-in einer CD Extra.

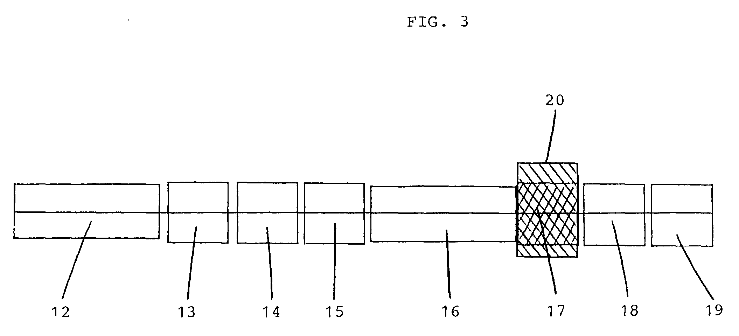

In der Figur 3 ist eine lineare Entwicklung der Dateninhalte einer CD Extra als Funktion der Zeit im Datenstrom bzw. als Funktion des Ortes auf der Spiralbahn einer so hergestellten CD dargestellt.

Man erkennt zunächst ein lead-in 12, welches auf übliche Weise im CD-Extra Format hergestellt ist. Die Dauer des lead-in 12 ist 02:25 (min.:s). Hieran anschließend folgen die Audio Spuren 13,14,15 (selbstverständlich sind mehr als drei Audio Spuren möglich) mit verschiedenen Musikstücken. An die letze Audio Spur ist wiederum das lead-out 16 mit einer Dauer von 01:30 angeschlossen. Daran anschließend ist ein lead-in 17 für die ROM Spur 18 eingerichtet, worauf ein lead-out 19 für die ROM Spur 18 folgt. Das lead-in 17 für die ROM Spur 18 dauert 01:00. Die vorstehenden Zeiten beziehen sich auf die Laufzeiten beim Lesen der CD mit normaler Geschwindigkeit.

Gemäß der Erfindung ist ein Blockadebereich 20 vorgesehen, welcher sich mit dem lead-in 17 für die ROM Spur 18 deckt. Der Blockadebereich ist entsprechend dem Beispiel 6 hergestellt worden mit dem folgenden Parametern. Es wurde mit einem am Anschluß 2 angelegten Signal von 5Vpp (0 bis -5V) in Rechteckform, mit einer Frequenz von 50 Hz und einem Tastverhältnis von 4:1 (1 = 0V, 6 = -5V) gearbeitet. Es erfolgte demnach gleichsam ein Zerhacken des lead-in 17.

Dieses Beispiel macht in aller Allgemeinheit deutlich, daß CD's, deren ordnungsgemäße Bestimmung sich lediglich auf das Abspielen von Audio Spuren beschränkt dennoch zum Zwecke des Kopierschutzes als CD-Extra eingerichtet sein kann. Analog können auch andere CD-Format, welche neben den Audio Komponenten noch weitere Komponenten enthalten, verwendet werden, wobei die Grundkonzeption darin besteht, die für das Abspielen von Audio Spuren an sich nicht notwendigen weiteren Komponenten mit einem Blockadebereich zu versehen, wobei weiteren Komponenten von einem Brenner, im Gegensatz zu einem normalen Audio Player erkannt und auszulesen versucht werden. Aufgrund des Blockadebereiches in diesen an sich überflüssigen weiteren Bereichen gelingt die Auslesung dieser Bereiche nicht miit der Folge einer Fehlermeldung bzw. eines Abbruchs des Programms des Brenners.

## Patentansprüche

1. Compact Disc enthaltend Informationsbereiche mit einem Datenblock, insbesondere Audioblock und/oder CD-ROM, sowie zumindest einen lead-in und/oder einen lead-out,
wobei lead-in und/oder lead-out einen Blockadebereich umfassend leseinkompatible physikalische Strukturen enthalten.

2. Compact Disc nach Anspruch 1, wobei der Blockadebereich im vor einem Audioblock eingerichteten lead-in angeordnet ist.

3. Compact Disc nach Anspruch 1 oder 2, wobei der Blockadebereich 0,1 bis 60 s, vorzugsweise 1 bis 15 s, insbesondere 2 bis 10 s, vor dem Ende des lead-in beginnend eingerichtet ist.

4. Compact Disc nach Anspruch 3, wobei sich der Blockadebereich bis in die erste Spur des Audioblocks erstreckt, vorzugsweise 0,1 bis 60 s, vorzugsweise 1 bis 15 s, insbesondere 2 bis 10 s, weit.

5. Compact Disc nach Anspruch 4, wobei die erste Spur des Audioblocks als Null-Datei ausgebildet ist und vorzugsweise eine Länge 1 bis 600 s, höchstvorzugsweise 1 bis 60 s, insbesondere 10 bis 30 s, gemessen ab Ende des Blockadebereiches, aufweist.

6. Compact Disc nach einem der Ansprüche 1 bis 5, in der Ausführungsform als CD Extra, wobei zumindest ein Blockadebereich eingerichtet ist.

7. Compact Disc nach Anspruch 6, wobei ein Blockadebereich in lead-in der ROM Spur eingerichtet ist, und wobei optional zusätzlich das lead-in des Audioblocks einen weiteren Blockadebereich enthält.

8. Compact Disc nach einem der Ansprüche 1 bis 7, wobei der Blockadebereich im lead-in vor dem Audioblock durch Modulation des Datenstromsignals mit 10 bis 10000 Hz, vorzugsweise 100 bis 10000 Hz, insbesondere 100 bis 1000 Hz, erzeugt wird, und/oder wobei der Blockadebereich im lead-in vor der ROM Spur durch Modulation des Datenstromsignals mit 1 bis 10000 Hz, vorzugsweise 10 bis 1000 Hz, insbes. 10 bis 100 Hz, erzeugt wird.

9. Compact Disc enthaltend Informationsbereiche in der Folge lead-in, Datenblock, lead out, wobei der lead-in Bereich einen Organisationsinformationsblock mit Informationen über Organisationseigenschaften des Datenblocks enthält, sowie mit einem einen Kopiervorgang störenden Bereich,
**dadurch gekennzeichnet,**
**daß** der Organisationsinformationsblock falsche Organisationsinformationen bezüglich des unmittelbar folgenden Datenblocks enthält und/oder einen nicht auswertbaren Blockadebereich enthält und/oder die Compact Disc einen zweiten Organisationsinformationsblock mit einem nicht auswertbaren Blockadebereich hinter dem Datenblock enthält.

10. Compact Disc nach Anspruch 9, **dadurch gekennzeichnet, daß** der Blockadebereich physikalische Strukturen enthält, welche leseinkompatibel sind, und/oder Datenfragmentstrukturen.

11. Compact Disc nach Anspruch 9, **dadurch gekennzeichnet, daß** der Blockadebereich eine Struktur entsprechend Organisationsinformationen und/oder CD-ROM Daten oder Fragmenten hiervon aufweist.

12. Compact Disc nach einem der Ansprüche 1 bis 11, **dadurch gekennzeichnet, daß** die leseinkompatiblen physikalischen Strukturen ausgewählt sind aus der Gruppe bestehend aus "normfremde Pithöhe, normfremde Reflektivität, normfremde Pitlänge, normfremder Spurabstand, normfremde Flankensteilheit der Pitflanken, pitfreie Spur, Spur mit durchgehendem Pit, und Kombinationen solcher physikalischer Strukturen".

13. Verfahren zur Herstellung einer Compact Disc nach einem der Ansprüche 1 bis 12, mit den folgenden Verfahrensstufen:
a) es erfolgt eine Datenerfassung, insbesondere Audio und/oder ROM,
b) die erfaßten Daten werden in einen Datenblock formatiert,
c) es wird ein Organisationsinformationsblock erstellt und dem Datenblock als lead-in Bereich vorgeschaltet, wobei der Organisationsinformationsblock falsche Organisationsinformationen enthält, und/oder es wird ein Organisationsinformationsblock mit einem Blockadebereich erstellt und dem Datenblock als lead-in Bereich vorgeschaltet oder nachgeschaltet,
d) optional wird Information für einen lead-out Bereich erstellt und dem Datenblock nachgeschaltet,
e) der Datenstrom aus Stufe c) oder d) wird auf einen Master geschrieben, und
f) mit dem in Stufe e) erhaltenen Master werden eine Vielzahl von Compact Discs hergestellt.

14. Verfahren nach Anspruch 13, wobei innerhalb des Blockadebereichs im Zuge des Schreibens auf einen Master in Stufe e) leseinkompatible physikalische Strukturen und/oder Datenfragmentstrukturen erzeugt werden.

15. Programm zur Steuerung einer Anlage zur Herstellung von Masters codierend für ein Verfahren nach Anspruch 13 oder 14.
